# EUROPÄISCHE PATENTSCHRIFT

(11) **EP 2 018 538 B1**
(45) Veröffentlichungstag und Bekanntmachung des Hinweises auf die Patenterteilung: **03.04.2019**
(21) Anmeldenummer: 07725087.6
(22) Anmeldetag: 10.05.2007
(51) Int. Cl.: G01N 19/02

(54) **PRÜFEINRICHTUNG ZUR TRIBOLOGISCHEN UNTERSUCHUNG VON WERKSTOFFEN**
TEST DEVICE FOR TRIBOLOGICAL EXAMINATION OF MATERIALS
DISPOSITIF D'ESSAI PERMETTANT L'ANALYSE TRIBOLOGIQUE DE MATÉRIAUX

(30) Priorität: 12.05.2006 DE 102006022349
(43) Veröffentlichungstag der Anmeldung: 28.01.2009
(73) Patentinhaber: Optimol Instruments Prüftechnik GmbH, 81369 München (DE)
(72) Erfinder: EBRECHT, Johannes, 82279 Eching (DE)
(74) Vertreter: Wallinger, Michael
(86) Internationale Anmeldenummer: PCT/EP2007/004167
(87) Internationale Veröffentlichungsnummer: WO 2007/131709

(56) Entgegenhaltungen:
- WO-A-03/060487
- WO-A1-2006/055994
- AT-B- 414 302
- DE-A1- 19 921 760
- DE-A1-102004 047 106
- DE-C1- 10 113 591
- US-A- 5 377 525
- US-A- 5 388 442
- US-A1- 2002 062 678

## Beschreibung

Die vorliegende Erfindung betrifft eine Prüfeinrichtung zur Durchführung tribologischer Untersuchungen von Werkstoffen. Dabei können sowohl die Reibverhältnisse an Reibpartnern oder die Eigenschaften eines Schmiermittels, welches zwischen zwei Reibpartner eingebracht wird, untersucht werden. Dabei wird eine Kraft auf die zu untersuchenden Reibpartner aufgebracht und die, aus einer Relativbewegung resultierenden Reibkraft ermittelt.

Reibung entsteht bekanntlich, wenn die Flächen zweier Körper unter Normalkraftwirkung relativ zueinander bewegt werden. Die absolute Höhe der Reibkraft hängt dabei einerseits von der aufgebrachten Normalkraft und andererseits von den Oberflächeneigenschaften sowie gegebenenfalls von den Eigenschaften eines sich zwischen den Reibflächen befindenden Schmiermittels ab. Der Reibungskoeffizient µ bzw. die Reibzahl z, welche das Verhältnis von Normalkraft zur resultierenden Reibungskraft angibt, ist ebenso von diesen Größen abhängig.

Für tribologische Messungen, das heißt zur Untersuchung der Reibung zwischen Werkstoffen, werden üblicherweise Prüfvorrichtungen eingesetzt, bei denen ein erster Prüfkörper unter einer vorgegebenen Normalkraftbelastung relativ gegenüber mindestens einen zweiten Prüfkörper bewegt wird. Der erste Prüfkörper ist dabei mit einer entsprechenden Bewegungseinrichtung verbunden, die beispielsweise eine oszillierende oder eine rotierende Bewegung ausführt. Der zweite Prüfkörper ist so gelagert, dass die Kraft, die erforderlich ist, um den zweiten Prüfkörper während der Bewegung zu halten, erfasst wird.

Solche Systeme arbeiten besonders bei höheren Normalkräften zufriedenstellend. Bei Messungen, welche eine höhere Genauigkeit erfordern, hat sich jedoch gezeigt, dass das Messergebnis negativ dadurch beeinflusst wird, dass diese Messsysteme zu Schwingungen angeregt werden. Auch die zur Reduzierung von Schwingungen eingeführte Lagerung des Prüfkörpers auf einem Grundkörper mit einer hohen Massenträgheit und eine elastische Entkopplung von Grundkörper und Prüfkörper löst diese Aufgabe nicht immer in zufriedenstellender Weise. Weiterhin sind Vorrichtungen bekannt, welche ebenfalls elastische Elemente enthalten, um die Übertragung von Schwingungen zu reduzieren. Da die Schwingungsenergie in solchen Anordnungen jedoch im wesentlichen gedämpft und nicht vernichtet wird, ist diese Maßnahme jedoch häufig unzureichend, um präzise Messergebnisse zu erzielen.

Aus der DE 199 15 288 A1 ist eine Vorrichtung zur Untersuchung von Reibverhältnissen bekannt geworden, welche einen Prüfkörper auf einem elastischen Trägerelement aus Glas lagert, welches mehrere Federanordnungen mit unterschiedlicher Federsteifigkeit aufweist. Hierbei sind ein weiches und mit Anschlägen versehenes Parallelfederelement für die Einprägung der Tangentialbewegung sowie ein härteres Blattfederelement zur Normalkrafteinprägung, welches senkrecht zu den beiden Parallelfederelementen wirkt, in das elastische Element integriert. Die Vorrichtung dient vor allem zur Ermittlung von kleinen Reibungswerten mit hoher Genauigkeit. Für größere Reibungswerte und höhere aufgebrachte Kräfte ist diese Vorrichtung weniger geeignet.

In der DE 199 21 760 A1 wird vorgeschlagen, die Schwingung der Grundkörpers zu erfassen und das Messergebnis in einer Messwertverarbeitungseinrichtung so aufzubereiten, dass die Grundschwingungen bei der Auswertung des Messergebnisses berücksichtigt werden. Es ist daher eine erste Sensoreinrichtung vorgesehen, welche die Reibungskraft misst, und eine zweite Sensoreinrichtung, welche die Schwingungen des Grundkörpers erfasst. Die Verbesserung des Messergebnisses einer solchen Prüfvorrichtung steht jedoch einem relativ hohen Aufwand bei der Gestaltung der Prüfeinrichtung sowie bei der Auswertung der Messergebnisse gegenüber. Zudem kann das bewegte System aufgrund der geringen Dämpfung in einen instabilen Schwingungszustand geraten, dessen Effekte die Messergebnisse unzulässig verfälschen.

Die senkrecht zur Prüffläche wirkende Normalkraft wird bei Tribometern häufig in Form eines statischen Gewichtes, welches über eine Umlenkrolle gelagert ist, aufgebracht. Dies ist beispielsweise in WO 03/060478 beschrieben. In dieser Anmeldeschrift wird auch vorgeschlagen, anstelle eines statischen Gewichtes eine elektromagnetische Vorrichtung zur Erzeugung der Prüflast zu verwenden. Eine mögliche Ausführung ist dort jedoch nicht näher beschrieben.

In der europäischen Offenlegungsschrift EP 1 607 733 wird vorgeschlagen, die Prüfkraft auf einen sphärischen Prüfkörper, welcher innerhalb einer Röhre geführt wird, pneumatisch oder hydraulisch aufzubringen. Dabei wird die Kraft zwischen der Kugel und dem zweiten Prüfkörper durch den Versorgungsdruck des Fluids bestimmt.

Die WO 2006 / 055 994 A betrifft ein Verfahren zur Untersuchung von Materialeigenschaften mindestens einer von zwei gegeneinander bewegten Proben, auf die eine Normalkraft aufgebracht wird. Eine erhöhte Messgenauigkeit soll dadurch erreicht werden, dass die Normalkraft berührungslos über mindestens ein Magnetfeld oder mindestens einen Gas- oder Fluidstrom auf einen Probenkörper, dessen Halterung oder eine Probenführung eingebracht wird.

Die US 2002/0062678 A1 beschreibt eine Prüfeinrichtung zur Untersuchung des Reibverhaltens von Werkstoffen, der eine Antriebseinheit zur translatorischen Bewegung eines ersten Prüfkörpers, eine Messeinrichtung zum Messen der Kräfte, welche parallel zur Richtung der oszillierenden Krafteinleitung wirken und zum Erfassen der Prüfkräfte, welche zwischen dem ersten Prüfkörper und einem zweiten Prüfkörper wirken, wobei eine Lastregeleinrichtung vorgesehen ist, welche die zwischen den beiden Prüfkörpern wirkende Prüfkraft regelt, und wobei Verspanneinrichtungen vorgesehen sind, welche die Prüfbewegung direkt von der Antriebseinheit auf die Prüfanordnung übertragen, und wobei der Prüfeinrichtung eine Recheneinrichtung zugeordnet ist, welche durch ein Programm gesteuert ist, das in einem Speicher gespeichert ist.

Die DE 101 13 591 C1 beschreibt eine Prüfeinrichtung zur Untersuchung des Dichtungs-, Reib- und Verschleißverhaltens von Dichtsystemen mit einer angetriebenen Welle und eine Haltevorrichtung für das Dichtsystem, wobei die Welle berührungslos über magnetische Lager gelagert ist.

Die vorliegende Erfindung stellt sich die Aufgabe, eine Prüfeinrichtung für tribologische Untersuchungen zur Verfügung zu stellen, deren Aufbau es ermöglicht, die Prüfkraft so zwischen die zu untersuchenden Reibpartner einzuprägen, dass die Entstehung störender Schwingungen vermieden und so eine präzise Ermittlung der Reibwerte unterstützt wird.

Diese Aufgabe wird erfindungsgemäß durch den Gegenstand des Anspruchs 1 gelöst. Vorteilhafte Weiterbildungen sind Gegenstand der Unteransprüche.

Durch die erfindungsgemäße Prüfeinrichtung wird das Aufbringen einer hochpräzisen, nicht schwingungsbehafteten Kraft und so auch eine exakte Reibungsmessung ermöglicht. Hierfür wird die bei bekannten Tribometern schwingungsbehaftete Lagerung der Prüfkörperanordnung entkoppelt. Bei bekannten Anordnungen ist ein Prüfkörper über das Maschinenbett mit dem Grundkörper, an welchem der andere Prüfköper befestigt ist, verbunden, ohne dass dabei Freiheitsgrade der Übertragungselemente senkrecht zur Richtung des Kraftflusses vorgesehen sind. Auf diese Weise bilden die beiden Prüfkörper über ihre Lagerungen und das Maschinenbett ein schwingungsfähiges System. Für die Gestaltung des erfindungsgemäßen, schwingungsoptimierten Tribometers ist daher ein entkoppeltes Bauprinzip vorgesehen.

Demgemäss sieht die erfindungsgemäße Prüfeinrichtung vor, die Führung und Lagerung der Antriebseinheit im Bereich der Prüfkörperbefestigung gegenüber dem Maschinenbett mechanisch entkoppelt zu lagern. Für eine solche Lagerung können beispielsweise hydrodynamische, hydrostatische, aerodynamische, aerostatische oder auch magnetische Lagertypen eingesetzt werden. Magnetische Lager können dabei sowohl zumindest teilweise permanentmagnetisch oder auch elektromagnetisch oder aus einer Kombination von beidem ausgeführt sein. Es ist ebenfalls möglich, verschiedene entkoppelte Lagertypen zu kombinieren oder auch, unter Gewährleistung der für die Kraftübertragung erforderlichen Freiheitsgrade, die Prüfkörperanordnung in Verbindung mit anderen bekannten Lagertypen wie beispielsweise Gleit- oder Wälzlager zu gestalten. Bei einer Verwendung von magnetischen Lagern ist vorzugsweise eine Abschirmung der magnetischen Wirkung vorzusehen, um eine mögliche Beeinflussung der tribologischen Reibstelle zu vermeiden.

Die erfindungsgemäße Prüfeinrichtung sieht vor, die Prüfkraft direkt mittels der entkoppelten Lagerung einzuleiten, wodurch, abhängig von der Lagerbauart, eine weitgehend gerichtete Krafteinleitung ermöglicht wird. Hieraus ergeben sich erweiterte Möglichkeiten für Prüfaufbauten, wie beispielsweise zur vereinfachten Reibungsmessung an vorhandenen Bauteilen mit komplexen Geometrien. Die Richtung und Höhe der Kraft, welche von der entkoppelten Lagerung aufgebracht werden muss, ist dabei abhängig vom vorgesehenen Prüfaufbau, von der erforderlichen Prüfkraft und dem resultierenden Antriebseinheitsgewicht, welches ebenfalls durch die Lagerung aufgenommen werden muss.

Das erfindungsgemäß entkoppelte Bauprinzip sieht zur Aufbringung einer präzisen Prüfkraft sowie zur Vermeidung der Übertragung von Schwingungen vom Maschinenbett auf die Prüfanordnung eine Eliminierung der Kräfte, welche nicht Teil der aufgebrachten Prüfbewegung sind, vor. Dies bedingt eine Unterbrechung des geschlossenen Kraftflusses dieser Kräfte zwischen den mindestens zwei Prüfkörpern. Für diesen Zweck werden vorzugsweise Verspanneinrichtungen eingesetzt, welche einerseits eine Einstellung des Bewegungsbereichs mindestens eines Prüfkörpers in Richtung der Prüfkrafteinbringung und dabei Ausgleichsbewegungen ermöglichen, aber andererseits die Prüfbewegung, welche im wesentlichen in einer senkrechten Ebene zur Einbringung der Prüfkraft erfolgt, direkt vom Antrieb auf die Prüfanordnung übertragen.

Zum Betrieb der Antriebseinheit, an welcher mindestens ein erster Prüfkörper befestigt ist, und die im Bereich der Prüfkörperbefestigung bezüglich möglicher Seitenkräfte der Prüfkraft entkoppelt gelagert ist, kann im Falle einer oszillierend aufzubringenden Bewegung beispielsweise ein Linearmotor, ein Quarzmotor, ein Rotationsmotor mit Exzenter oder auch ein Shaker dienen. Zur Aufbringung einer Rotationsbewegung eignen sich beispielsweise Elektromotoren, Quarzmotoren oder auch Planarmotoren. Selbstverständlich ist es möglich, zum Betrieb einer Antriebseinheit weitere geeignete Antriebssysteme oder auch Kombinationen verschiedener Antriebsysteme zu verwenden.

Vorzugsweise ist mindestens ein erster Prüfkörper mittels einer Befestigungseinrichtung an der Antriebseinheit fixiert. Hierbei sind verschiedenste Formen dieses mindestens einen Prüfkörpers möglich: geometrische Grundkörper, wie beispielsweise Zylinder, Quader, Elemente mit sphärischen Oberflächen oder auch Maschinenbauteile mit unterschiedlichsten Geometrien. Die Antriebseinheit weist bevorzugt abhängig vom Prüfaufbau unterschiedlich viele Lagerstellen bezüglich des Maschinenbetts auf. Diese Lagerstellen können gemäß den Erfordernissen des Prüfaufbaus und der Position von Verspanneinrichtungen durch entkoppelte Lagerungen oder auch durch Lagerstellen mit einem oder mehreren Freiheitsgraden ausgeführt sein. Das Gesamtlagerkonzept muss dabei bevorzugt eine statisch bestimmte Lagerung der Antriebseinheit gewährleisten, die jedoch, wie zuvor beschrieben, eine Übertragung störender Schwingungen vom Maschinenbett auf die Prüfanordnung ausschließt. Abhängig von der gewünschten Bewegung, welche sich aus oszillierenden und rotierenden Bewegungselementen zusammensetzen kann, sind in der erfindungsgemäßen Prüfeinrichtung vorzugsweise mehrere Lagerstellen vorgesehen, welche beispielsweise in einer Reihe, in einer Ebene oder auch im Raum angeordnet sein können.

Mindestens ein zweiter Prüfkörper ist fest oder beweglich bezüglich des Maschinenbetts gelagert. Dabei ist dieser mindestens eine zweite Prüfkörper vorzugsweise mittels einer Befestigungseinrichtung an einem Grundkörper fixiert. Auch hierbei sind verschiedenste Formen dieses Prüfkörpers möglich: geometrische Grundkörper, wie beispielsweise Zylinder oder Quader, welche z. B. einen Punkt-Flächen-, einen Linien-Flächen- oder einen Flächen-Flächen-Kontakt ermöglichen. Ebenso können beispielsweise spezifische Kontaktformen bei vorhandenen Maschinenbauteilen untersucht werden.

In einer weiteren bevorzugten Ausführungsform ist der Grundkörper, an dem der mindestens eine zweite Prüfkörper befestigt ist, angetrieben. Als Antriebseinheit kommen auch hier neben weiteren geeigneten Antriebssystemen Linearmotoren, Quarzmotoren, Rotationsmotoren mit oder ohne Exzenter, Planarmotoren, Shaker oder auch Kombinationen dieser Antriebssysteme in Frage.

Um einen einfachen Aufbau der Prüfeinrichtung zu gewährleisten, sind vorzugsweise an dem Grundkörper, an welchem der mindestens eine zweite Prüfkörper mittels einer Befestigungseinrichtung fixiert ist, Ausgleichselemente vorgesehen, welche eine absolute Parallelität der Prüfkörperflächen gewährleisten. Dabei dienen vorzugsweise ebenso diese Ausgleichselemente oder zusätzliche Einrichtungen zum Ausgleich von Höhendifferenzen, wie sie beispielsweise durch Verschleißerscheinungen auftreten. Als Ausgleichselemente können in bekannter Weise Federplatten oder ähnliche Hilfsmittel eingesetzt werden.

Die erfindungsgemäße Prüfeinrichtung umfasst ferner vorzugsweise eine Messeinrichtung, welche zur Erfassung der erforderlichen Messwerte vorgesehen ist. Grundlegend ist hierbei die Messung der resultierenden Reibkräfte, die beispielsweise bei einer oszillierenden Bewegung zwischen den Prüfkörpern im wesentlichen parallel zur Richtung der Krafteinleitung der Antriebseinheit, beziehungsweise bei einer rotierenden Bewegung in Umfangsrichtung des rotierenden Prüfkörpers wirken. Zur Messung der Reibkraft am vorzugsweise feststehenden Prüfkörper dient im Falle einer translatorischen Antriebsbewegung mindestens ein Kraftsensor, dessen Funktion beispielsweise piezoelektronisch, mittels Dehnmessstreifen oder durch ein geeignetes weiteres Messprinzip dargestellt sein kann. Bei einer rotierenden Antriebsbewegung wird die resultierende Reibkraft ebenso am vorzugsweise feststehenden Prüfkörper mittels mindestens eines Kraftsensors in Umfangsrichtung der Rotation erfasst. Stellt die Bewegung eine Mischform aus rotierender und translatorischer Bewegung dar, so sind vorzugsweise mehrere Kraftsensoren so anzuordnen, dass die Messeinrichtung die hierbei resultierenden charakteristischen Reibkräfte aufnimmt. Auch zur Messung von Rotationskräften oder Kräften mit translatorischen und rotatorischen Anteilen können die genannten Arten von Kraftsensoren eingesetzt werden.

Ferner dient die Messeinrichtung auch zur Ermittelung der Prüfkraft, die zwischen die Reibflächen aufgebracht wird. Dazu wird vorzugsweise an einer Befestigungseinrichtung eines Prüfkörpers ein Kraftsensor zur Messung der Normalkraft angeordnet. Hierzu eignen sich grundsätzlich die erste als auch die zweite Befestigungseinrichtung. In Abhängigkeit zumindest von der Prüfungsanordnung, der Richtung und Bewegung der Krafteinleitung sowie der Zugänglichkeit wird die Anordnung der Kraftsensoren bestimmt. Zur Kraftmessung eignen sich auch hier Sensoren, deren Funktion beispielsweise piezoelektronisch, mittels Dehnmessstreifen (DMS) oder durch ein geeignetes weiteres Messprinzip dargestellt sein kann. Wirkt die Prüfkraft aufgrund der geometrischen Gestaltung der Prüfkörper oder der Prüfanordnung (z. B. Vier-Kugel-Anordnung) nicht in Richtung der Normalkraft, so kann die Prüfkraft beispielsweise mittels eines Sensors, der bezüglich der Kraftrichtung angeordnet ist, gemessen werden. Alternativ kann die sich aus der Normalkraft ergebende Prüfkraft vorzugsweise in der, der Prüfeinrichtung zugeordneten, Recheneinrichtung berechnet werden.

Zur Regelung der Prüfkraft, welche mittels der Abschnitte der Antriebseinheit, die in den entkoppelten Lagern geführt werden, auf die Prüfanordnung aufgebracht wird, wird bevorzugt auch die Position der gelagerten Abschnitte von der Messeinrichtung erfasst und in der Maschinensteuerung und insbesondere der Lastregeleinrichtung weiterverarbeitet. Zur Positionsmessung umfasst die Messeinrichtung daher vorzugsweise in Zahl und Anordnung dem Aufbau der entkoppelten Lagerung entsprechende Positionssensoren, welche die Position der Antriebseinheit hinreichend exakt erfassen.

Diese Sensoren erfassen die Position der Antriebseinheit beispielsweise mittels eines induktiven, kapazitiven oder optischen Funktionsprinzips. Es können selbstverständlich auch Positionssensoren, welche mittels weiterer geeigneter Messprinzipien arbeiten eingesetzt werden. Ist der Querschnitt des Abschnitts der Antriebseinheit, welche im entkoppelten Lager geführt wird, beispielsweise kreisförmig, so können bevorzugt zwei Sensoren um 180°, drei Sensoren um 120° oder auch vier Sensoren um 90° versetzt um den Antriebseinheitsabschnitt angeordnet sein. Eine solche Art der Anordnung ist bevorzugt dann zweckmäßig, wenn ebenso viele Lagerfunktionseinheiten, wie bei Magnetlagern beispielsweise Elektromagnete, in gleicher Weise angeordnet sind.

Damit wird eine direkte Zuordnung der erfassten Positionswerte zu den Funktionseinheiten ermöglicht.

In einer bevorzugten Ausführungsform der erfindungsgemäßen Prüfeinrichtung werden mittels der Messeinrichtung auch eine Vielzahl weiterer Verfahrensparameter erfasst. Zu diesen Verfahrensparametern zählen beispielsweise die Betriebsdaten der Antriebe der Prüfeinrichtung oder die Positionierung und Stellung der Prüfkörper zueinander. Vorzugsweise findet ebenso eine zusätzliche Messung von resultierenden Kräften beispielsweise in den Verspanneinrichtungen und eine Erfassung von möglicherweise in das Maschinenbett oder in die Antriebseinrichtung eingebrachter Schwingungen und dergleichen Störgrößen statt. Vorzugsweise umfasst die erfindungsgemäße Messeinrichtung mehrere Sensoren, welche die Parameter der Prüfumgebung erfassen. Dabei sind hauptsächlich die Temperatur, die Luftfeuchtigkeit und der Luftdruck als die Kennwerte zu nennen, welche das Prüfergebnis beeinflussen. Es kann jedoch noch erforderlich sein, mittels zusätzlicher, der Messeinrichtung zugeordneter Sensoren weitere Kennwerte zu erfassen.

Zur Steuerung der erfindungsgemäßen Prüfeinrichtung können verschiedene Steuerkonzepte eingesetzt werden. Die bevorzugte Ausführungsform arbeitet beispielsweise mittels einer Thyristorsteuerung. Unabhängig vom Steuerkonzept enthält die Recheneinrichtung wenigstens einen Mikroprozessor, welche durch ein Programm gesteuert ist, das in einem dem Mikroprozessor zugeordnetem Speicher gespeichert ist. Dieser Speicher kann in beliebig viele, auch unterschiedliche Speicherbereiche aufgeteilt sein. Aus den eingelesenen Daten der Messeinrichtung leitet der Mikroprozessor die Steuersignale zur Durchführung der tribologischen Untersuchung ab. Dabei regelt die Lastregeleinrichtung als Funktionseinheit des Mikroprozessors die Prüfkraft, welche über die entkoppelte Lagerung der Antriebseinheit zwischen die Prüfflächen aufgebracht wird.

In diesen Mikroprozessor werden vorzugsweise alle Daten der Messeinrichtung eingelesen, d. h. die Messwerte aller an der Prüfeinrichtung vorgesehenen Sensoren. Insbesondere die Messwerte der Kraftsensoren, welche die Kraft zwischen den Prüfkörpern erfassen und/ oder die Positionswerte der Abschnitte der Antriebseinrichtung in den entkoppelten Lagern, dienen als Eingangsgrößen der Lastregeleinrichtung. Mittels dieser Daten regelt die Lastregeleinrichtung vorzugsweise die auf die Prüfkörper wirkende Normalkraft exakt auf den vorgegebenen Wert ein.

Alle Messwerte der Messeinrichtung werden vorzugsweise in den Speicher des Mikroprozessors eingelesen. Dabei werden die Daten der Sensoren, welche die resultierenden Reibkräfte sowie die Prüfbedingungen aufnehmen, bevorzugt zur weiteren Auswertung im Speicher bereitgestellt. Der Mikroprozessor umfasst vorzugsweise elektrische Schnittstellen, an welche eine Auswerteeinrichtung, wie zum Beispiel ein Personal Computer (PC) oder eine gerätespezifische Bedieneinheit, die über eine Eingabeeinheit wie beispielsweise eine Tastatur und eine Anzeige verfügt, angeschlossen werden kann. Der Anschluss kann dabei beispielsweise mittels eines Kabels oder auch kabellos bevorzugt mittels Wireless-LAN, Infrarotschnittstelle oder Blue-Tooth-Technologie erfolgen. Somit können die Messergebnisse der erfindungsgemäßen Prüfeinrichtung mittels einer beliebigen geeigneten Software, welche beispielsweise auf einem PC, einer gerätespezifischen Bedieneinheit oder einer sonstigen Auswertevorrichtung vorhanden ist, weiterverarbeitet werden.

Weitere Vorteile, Merkmale und Anwendungsmöglichkeiten der vorliegenden Erfindung ergeben sich aus der nachfolgenden Beschreibung in Zusammenhang mit den Figuren. Es zeigt:
- Fig. 1: den schematischen Aufbau einer erfindungsgemäßen Prüfeinrichtung mit oszillierender Relativbewegung zwischen den Prüfkörpern,
- Fig. 2: den schematischen Aufbau eines Grundkörpers mit Rotationsantrieb,
- Fig. 3: ein schematisches Blockschaltbild der Recheneinrichtung; und
- Fig. 4: ein schematisches Blockschaltbild des Regelkreises der Lastregeleinrichtung.

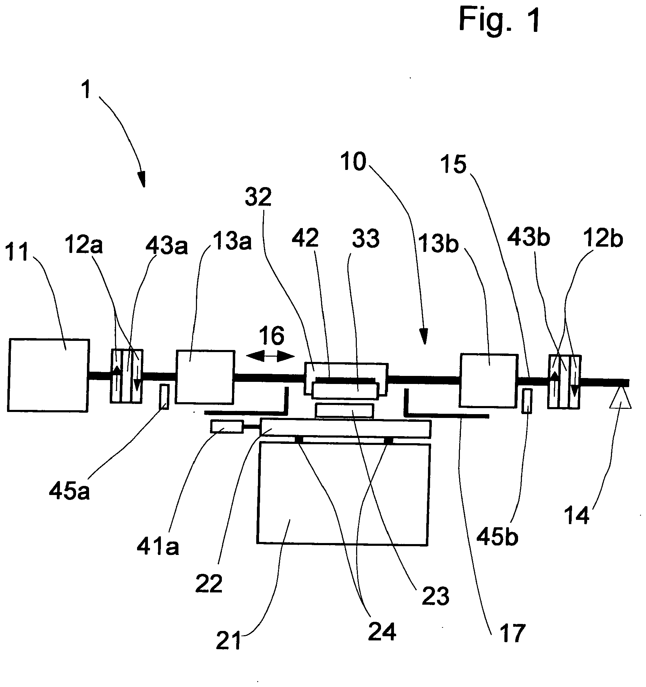

Fig. 1 zeigt den schematischen Aufbau einer erfindungsgemäßen Prüfeinrichtung 1, bei der ein erster Prüfkörper, der an einer Antriebseinheit befestigt ist, unter einer oszillierenden Bewegung eine Reibkraft auf einen zweiten Prüfkörper aufbringt. Die Antriebseinheit 10 umfasst dabei die Antriebswelle 15, die sich vom links dargestellten Oszillationsantrieb 11 bis zu der rechts dargestellten Lagerung 14 der Antriebseinheit erstreckt. Ungefähr in der Mitte der Antriebswelle 15, welche sich oszillierend in Richtung des Pfeils 16 bewegt, ist die erste Befestigungseinrichtung 32 für den ersten Prüfkörper 33 an der Antriebswelle 15 fixiert. Zu beiden Seiten dieser ersten Befestigungseinrichtung 32 befinden sich am Umfang der Antriebswelle 15 jeweils entkoppelte Lager 13a und 13b, welche im Ausführungsbeispiel in Form von Magnetlagern ausgeführt sind.

Zu beiden Seiten ist zwischen der tribologischen Reibstelle und den magnetischen Lagern 13 eine Abschirmung 17 angeordnet, welche eine magnetische Wirkung auf die Reibungsuntersuchung verhindert. Wiederum zu beiden Seiten der Lager sind zwischen dem Lager 13a und dem Oszillationsantrieb 11 beziehungsweise zwischen dem Lager 13b und Lagerung 14 der Antriebseinheit Verspanneinrichtungen 12a und12b angeordnet. Diese Verspanneinrichtungen erlauben eine Einstellung des vertikalen Freiheitsgrads der Antriebseinheit bezüglich des Maschinenbetts. An der ersten Befestigungseinrichtung 32 befindet sich ein Kraftsensor 42, welcher die zwischen die beiden Prüfkörper 23 und 33 eingeprägte Normalkraft erfasst.

Der Grundkörper 21 ist am Maschinenbett, das in Fig. 1 nicht dargestellt ist, angeordnet. Dem Grundkörper 21 ist eine zweite Befestigungseinrichtung 22 zugeordnet, an welchem der zweiten Prüfkörper 23 fixiert wird. Der hier gezeigte Grundkörper 21 mit der zweiten Befestigungseinrichtung 22 stellt eine statische Trägereinheit ohne Antrieb dar. Zwischen dem Grundkörper 21 und der zweiten Befestigungseinrichtung 22 sind Ausgleichselemente 24 angeordnet, welche die Parallelität der Flächen der Prüfkörper sicherstellen und beispielsweise bei Verschleiß entstehende Höhendifferenzen ausgleichen.

Der zweiten Befestigungseinrichtung 22 ist ein Kraftsensor 41a zum Erfassen der Reibkraft, welche aus der translatorischen Bewegung des Oszillations-antriebs 11 resultiert, zugeordnet. Die Position des zweiten Prüfkörpers 23 wird über die Positionssensoren 45a und 45b, welche der entkoppelten Lagerstelle zugeordnet sind und über die Positionssensoren 43a und 43b, welche an den beiden Spanneinheiten 12a und 12b angeordnet sind, aufgenommen.

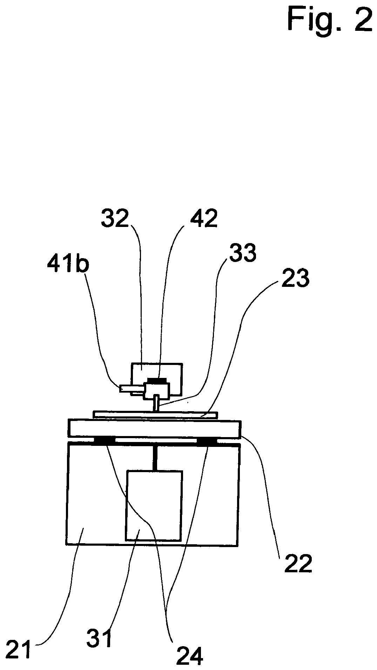

In Fig. 2 ist der schematische Aufbau einer weiteren Prüfanordnung für eine tribologische Untersuchung gezeigt. Auf dem Grundkörper 21, welchem ein Rotationsantrieb 31 zugeordnet ist, ist die zweite Befestigungseinrichtung 22 angeordnet. Im Ausführungsbeispiel ist an der dargestellten Befestigungseinrichtung 22 ein scheibenförmiger zweiter Prüfkörper 23 fixiert. An der ersten Befestigungseinrichtung 32 ist ein zylindrischer Prüfkörper 33 fixiert. Die dargestellte Anordnung ist als Stift-Fläche-Anordnung bekannt. Die Antriebswelle 15, die in diesem Ausführungsbeispiel nicht angetrieben ist, jedoch die mittels der entkoppelten Lagerung aufgebrachte Prüfkraft einprägt, ist in Fig. 2 nicht gezeigt.

Die Messeinrichtung des in Fig. 2 dargestellten Prüfaufbaus umfasst einen Rotationskraftsensor 41b, welcher zur Erfassung der rotatorischen Reibkraft an der ersten Befestigungseinrichtung 32 angeordnet ist. Zur Messung der Normalkraft, welche zwischen die beiden Prüfkörper eingeprägt ist, ist an der ersten Befestigungseinrichtung 32 der Kraftsensor 42 angeordnet.

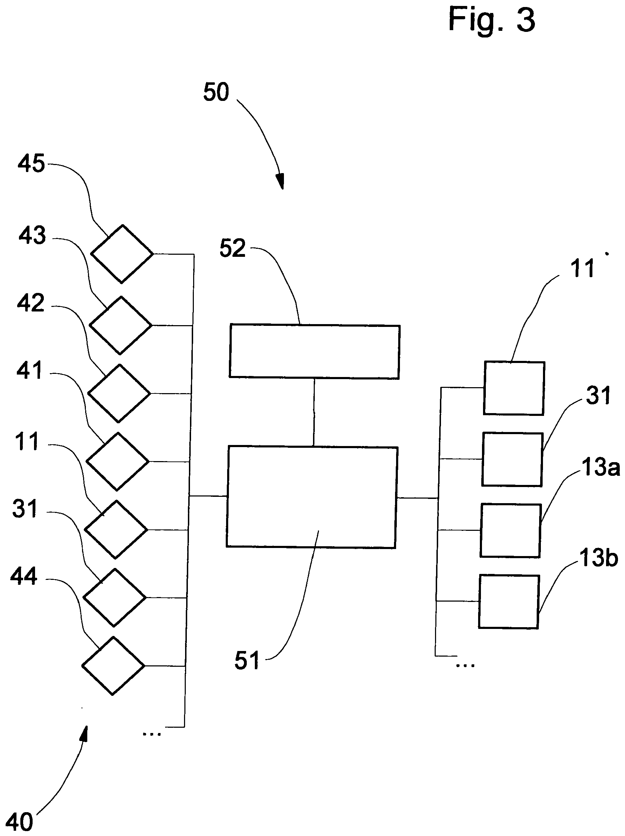

Fig. 3 zeigt ein schematisches Blockschaltbild einer beispielhaften Recheneinrichtung 50 der erfindungsgemäßen Prüfeinrichtung. Die von den Kraftsensoren 41 und 42 sowie den Positionssensoren 45 und 43 erfassten Messwerte dienen gemeinsam mit den Funktionswerten der Antriebe 11 und 31 sowie mit zusätzlich aufgezeichneten Messwerten, welche mit Sensoren für Umgebungsparameter 44 erfasst werden, als Eingangswerte des Mikroprozessors 51. Aus den eingelesenen Daten errechnet der Mikroprozessor 51 die Steuerwerte für die Antriebe 11 und 31 zur exakten Steuerung der im Prüflauf vorgesehenen Bewegung zwischen den Prüfkörpern. Dabei umfasst der Mikroprozessor 51 auch die Funktionalität einer Lastregeleinrichtung, welche die entkoppelten Lager 13a und 13b so regelt, dass sie eine präzise Prüfkraft auf die Antriebswelle 15 übertragen und somit zwischen die Prüfkörper 23 und 33 einprägen. Die im Mikroprozessor 51 verarbeiteten Daten werden zusammen mit den von der Messeinrichtung 40 erfassten Werten im Speicher 52 für eine weitere Auswertung gespeichert.

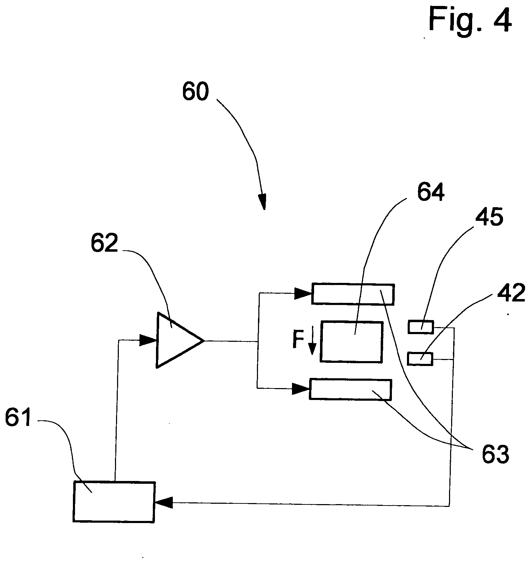

In Fig. 4 ist ein schematisches Blockschaltbild eines beispielhaften Regelkreises 60 einer Lastregeleinrichtung dargestellt. Das Ziel der Lastregeleinrichtung ist es, auf die Antriebswelle 15 und somit zwischen die beiden Prüfkörper 23 und 33 eine in Richtung und Höhe vorbestimmte Prüfkraft aufzubringen. Die Regelung ist dabei dafür verantwortlich, die Antriebswelle 15 in einer vorgesehenen, lastbehafteten Lage senkrecht zur Prüffläche festzuhalten. Dabei muss die Summe aller auf den ersten Prüfkörper 33 einwirkenden Kräfte in der vorgesehenen Richtung dem Betrag der erforderlichen Prüfkraft entsprechen. Dazu wird die Position des Wellenabschnitts 64 über die Positionssensoren 45 erfasst. Die Höhe der vom Lager aufgebrachten Kraft wird vom Kraftsensor 42 aufgenommen. Diese Werte bestimmen als Eingangswerte des Reglers 61 die Ist-Situation im Lager.

Am Umfang des Wellenabschnitts 64 der Antriebseinrichtung befinden sich die Elektromagnete 63. Mittels der Eingangswerte der Sensoren 42 und 45 steuert der Regler 61 den Strom in den Elektromagneten 63 über den Leistungsverstärker 62 so, dass die gewünschte Prüfkraft eingestellt wird. Durch die aktive Regelung wird dabei ein stabiler Schwebezustand erreicht.

## Patentansprüche

1. Prüfeinrichtung **(1)** zur tribologischen Untersuchung von Werkstoffen, welche aufweist:
mindestens einen ersten Prüfkörper **(33),** der eine erste Prüffläche aufweist,
eine oszillierend und rotierend antreibbare Antriebseinheit **(10)** zur translatorischen und rotierenden Bewegung des mindestens einen ersten Prüfkörpers **(33)**,
eine Messeinrichtung **(40)**
einerseits zum Messen der Kräfte, welche im Wesentlichen parallel zur Richtung einer oszillierenden Krafteinleitung und in Umfangsrichtung
einer rotierenden Krafteinleitung der Antriebseinheit **(10)** eines mindestens zweiten Prüfkörpers **(23)** wirken; und
andererseits zum Erfassen der Prüfkräfte, welche zwischen dem mindestens einen ersten Prüfkörper **(33)** und dem mindestens einen zweiten Prüfkörper **(23)** wirken,
ferner eine Lastregeleinrichtung vorgesehen ist, welche die zwischen den beiden Prüfkörpern **(33, 23)** wirkende Prüfkraft regelt,
wobei die vorgegebene Prüfkraft mithilfe einer entkoppelten Lagerung **(13)** der Antriebseinheit **(10)** auf die Prüfkörper **(33, 23)** aufgebracht wird,
wobei das Wirkprinzip der entkoppelten Lagerung **(13)** aus einer Gruppe ausgewählt ist, welche magnetische, hydrostatische, hydrodynamische, aerostatische und aerodynamische Effekte umfasst; und
wobei Verspanneinrichtungen **(12)** vorgesehen sind, welche die Prüfbewegung direkt von der Antriebseinheit **(10)** auf die Prüfanordnung übertragen und dabei Ausgleichsbewegungen in Richtung der Prüfkrafteinbringung ermöglichen,
wobei der Prüfeinrichtung **(1)** eine Recheneinrichtung **(50)** mit wenigstens einen Mikroprozessor **(51)** zugeordnet ist, welche durch ein Programm gesteuert ist, das in einem dem Mikroprozessor **(51)** zugeordneten Speicher **(52)** gespeichert ist.

2. Prüfeinrichtung **(1)** gemäß Anspruch 1, **dadurch gekennzeichnet, dass** mindestens zwei Lagerstellen vorgesehen sind, welche beispielsweise in einer Reihe, in einer Ebene oder auch im Raum angeordnet sein können.

3. Prüfeinrichtung **(1)** gemäß mindestens einem der Ansprüche 1 bis 2, **dadurch gekennzeichnet, dass** ein Grundkörper **(21),** an dem der mindestens eine zweite Prüfkörper **(23)** befestigt ist, entsprechend einer Prüfbewegung angetrieben wird.

4. Prüfeinrichtung **(1)** gemäß mindestens einem der Ansprüche 1 bis 3, **dadurch gekennzeichnet, dass** die Richtung und Höhe der auf die Prüfanordnung aufbringbaren Kraft weitgehend frei einstellbar ist.

5. Prüfeinrichtung **(1)** gemäß mindestens einem der Ansprüche 1 bis 4, **dadurch gekennzeichnet, dass** die tribologische Reibstelle bezüglich einer möglichen Beeinflussung durch die entkoppelte Lagerung **(13)** der Antriebseinheit **(10)** abgeschirmt ist.

6. Prüfeinrichtung **(1)** gemäß mindestens einem der Ansprüche 1 bis 5, **dadurch gekennzeichnet, dass** eine Prüfkörperlagerung Ausgleichselemente **(24)** umfasst, welche die Parallelität der Prüfflächen sicherstellen und beispielsweise bei Verschleiß entstehende Höhendifferenzen ausgleichen.

7. Prüfeinrichtung **(1)** gemäß mindestens einem der Ansprüche 1 bis 6, **dadurch gekennzeichnet, dass** sie zur Untersuchung eines zwischen die Prüfkörper **(33,23)** eingebrachten Mediums dient.

8. Prüfeinrichtung **(1)** gemäß mindestens einem der Ansprüche 1 bis 7, **dadurch gekennzeichnet, dass** die Messeinrichtung **(40)** Sensoren **(41a)** umfasst, welche im Bereich einer Prüfkörperbefestigung **(22, 32)** angeordnet sind und zur Messung der resultierenden Reibkräfte dienen.

9. Prüfeinrichtung **(1)** gemäß mindestens einem der Ansprüche 1 bis 8, **dadurch gekennzeichnet, dass** die Messeinrichtung **(40)** mindestens einen Sensor **(42)** aufweist, welcher zur Erfassung der über die Antriebseinheit **(10)** auf die Prüfkörperanordnung aufgebrachten Normalkraft dient.

10. Prüfeinrichtung **(1)** gemäß mindestens einem der Ansprüche 1 bis 9, **dadurch gekennzeichnet, dass** die Messeinrichtung **(40)** eine Vielzahl von Verfahrensparametern der Untersuchungsdurchführung erfasst.

11. Prüfeinrichtung **(1)** gemäß mindestens einem der Ansprüche 1 bis 10, **dadurch gekennzeichnet, dass** die Messeinrichtung **(40)** im Bereich der entkoppelten Lagerung **(13)** mindestens einen Sensor **(45)** aufweist, der zur Ermittlung der Position der Antriebseinheit **(10)** dient.

12. Prüfeinrichtung **(1)** gemäß mindestens einem der Ansprüche 1 bis 11, **dadurch gekennzeichnet, dass** Messwerte der Messeinrichtung **(40)** als Eingabewerte an den Mikroprozessor **(51)** weitergeleitet werden.

13. Prüfeinrichtung **(1)** gemäß mindestens einem der Ansprüche 1 bis 12, **dadurch gekennzeichnet, dass** der Mikroprozessor **(51)** eine Lastregeleinrichtung umfasst, welche die Prüfkraft regelt.

14. Prüfeinrichtung **(1)** gemäß mindestens einem der Ansprüche 1 bis 13, **dadurch gekennzeichnet, dass** der Mikroprozessor **(51)** Schnittstellen umfasst, an welche eine Auswerteeinrichtung oder eine gerätespezifische Bedieneinheit angeschlossen werden kann.

## Claims

1. A test device **(1)** for the tribological examination of materials, comprising:
at least one first test body **(33)** having a first test surface,
a drive unit **(10)** which is able to be oscillatingly and rotatively driven for the translational and rotational movement of the at least one first test body,
a measuring device **(40)**
for on the one hand measuring forces acting substantially parallel to the direction of an oscillating application of force and in the circumferential direction of a rotational application of force of the drive unit **(10)** of an at least second test body **(23);** and
for on the other hand detecting the test forces acting between the at least one first test body **(33)** and the at least one second test body **(23),**
a load regulating device being further provided which regulates the test force acting between the two test bodies **(33, 23),**
wherein the predefined test force is applied to the test bodies **(33, 23)** via a decoupled bearing **(13)** of the drive unit **(10),**
wherein the functional principle of the decoupled bearing **(13)** is selected from among a group including magnetic, hydrostatic, hydrodynamic, aerostatic and aerodynamic effects; and
wherein bracing devices **(12)** are provided which transmit the test movement directly from the drive unit **(10)** to the test configuration, thereby allowing compensating motion in the direction of the application of the test force,
wherein the test device **(1)** is allocated a computing device **(50)** with at least one microprocessor **(51)** which is controlled by a program stored in a memory **(52)** allocated to the microprocessor.

2. The test device **(1)** according to claim 1, **characterized in that** at least two bearing points are provided which can be arranged for example in a row, in a plane, or also in space.

3. The test device **(1)** according to at least one of claims 1 to 2, **characterized in that** the base body **(21)** on which the at least one second test body **(23)** is fixed is driven pursuant to a test movement.

4. The test device **(1)** according to at least one of claims 1 to 3, **characterized in that** the direction and magnitude of the force able to be applied to the test configuration is to a large extent freely adjustable.

5. The test device **(1)** according to at least one of claims 1 to 4, **characterized in that** the tribological frictional point is shielded with respect to possible influencing by the decoupled bearing **(13)** of the drive unit **(10).**

6. The test device **(1)** according to at least one of claims 1 to 5, **characterized in that** a test body mount comprises compensating elements **(24)** which ensure test surface parallelism and compensate for differences in height resulting for example from wear.

7. The test device **(1)** according to at least one of claims 1 to 6, **characterized in that** same serves in examining a medium introduced between the test bodies **(33, 23).**

8. The test device **(1)** according to at least one of claims 1 to 7, **characterized in that** the measuring device **(40)** comprises sensors **(41a)** arranged in the area of a test body fixing **(22, 32)** and which serve in measuring the resulting frictional forces.

9. The test device **(1)** according to at least one of claims 1 to 8, **characterized in that** the measuring device **(40)** has at least one sensor **(42)** which serves in detecting the normal force applied to the test configuration via the drive unit **(10).**

10. The test device **(1)** according to at least one of claims 1 to 9, **characterized in that** the measuring device **(40)** detects a plurality of examination procedure method parameters.

11. The test device **(1)** according to at least one of claims 1 to 10, **characterized in that** the measuring device **(40)** comprises at least one sensor **(45)** in the area of the decoupled bearing **(13)** which serves in determining the position of the drive unit (10).

12. The test device **(1)** according to at least one of claims 1 to 11, **characterized in that** measured values of the measuring device **(40)** are relayed to the microprocessor **(51)** as input values.

13. The test device **(1)** according to at least one of claims 1 to 12, **characterized in that** the microprocessor **(51)** comprises a load regulating device which regulates the test force.

14. The test device **(1)** according to at least one of claims 1 to 13, **characterized in that** the microprocessor **(51)** comprises interfaces to which an evaluation device or a device-specific operating unit can be connected.

## Revendications

1. Dispositif d'essai (1) servant à l'analyse tribologique de matériaux, lequel présente :
au moins une première éprouvette (33), qui présente une première surface d'essai,
une unité d'entraînement (10) pouvant être entraînée en oscillation et en rotation, servant à déplacer par translation et par rotation l'au moins une première éprouvette (33),
un dispositif de mesure (40) servant
d'une part à mesurer les forces, qui agissent sensiblement de manière parallèle à la direction d'une application de force par oscillation et dans la direction périphérique d'une application de force par rotation de l'unité d'entraînement (10) d'au moins une deuxième éprouvette (23) ;
d'autre part à détecter les forces d'essai, qui agissent entre l'au moins une première éprouvette (33) et l'au moins une deuxième éprouvette (23),
en outre un dispositif de réglage de charges, qui règle la force d'essai agissant entre les deux éprouvettes (33, 23),
dans lequel la force d'essai spécifiée est appliquée sur les éprouvettes (33, 23) à l'aide d'un support (13) désaccouplé de l'unité d'entraînement (10),
dans lequel le principe d'action du support (13) désaccouplé est choisi parmi un groupe, qui comprend des effets magnétiques, hydrostatiques, hydrodynamiques, aérostatiques et aérodynamiques, et
dans lequel sont prévus des dispositifs de mise sous tension (12), lesquels transmettent le mouvement d'essai directement depuis l'unité d'entraînement (10) sur l'ensemble d'essai et permettent dans ce cadre des mouvements de compensation en direction de l'application de force d'essai,
dans lequel est associé au dispositif d'essai (1) un dispositif de calcul (50) avec au moins un microprocesseur (51), lequel est commandé par un programme, qui est mémorisé dans une mémoire (52) associée au microprocesseur (51).

2. Dispositif d'essai (1) selon la revendication 1, **caractérisé en ce qu'**au moins eux emplacements d'appui sont prévus, lesquels peuvent être disposés par exemple en une rangée, dans un plan ou également dans l'espace.

3. Dispositif d'essai (1) selon au moins l'une quelconque des revendications 1 à 2, **caractérisé en ce qu'**un corps de base (21), au niveau duquel l'au moins une deuxième éprouvette (23) est fixée, est entraîné de manière correspondante à un mouvement d'essai.

4. Dispositif d'essai (1) selon au moins l'une quelconque des revendications 1 à 3, **caractérisé en ce que** la direction et la hauteur de la force pouvant être appliquée sur l'ensemble d'essai peuvent être réglées largement librement.

5. Dispositif d'essai (1) selon au moins l'une quelconque des revendications 1 à 4, **caractérisé en ce que** l'emplacement de frottement tribologique est protégé par rapport à une influence possible par le support (13) désaccouplé de l'unité d'entraînement (10).

6. Dispositif d'essai (1) selon au moins l'une quelconque des revendications 1 à 5, **caractérisé en ce qu'**un support d'éprouvette comprend des éléments de compensation (24), lesquels garantissent le parallélisme des surfaces d'essai et compensent par exemple des différences de hauteur résultantes en cas d'usure.

7. Dispositif d'essai (1) selon au moins l'une quelconque des revendications 1 à 6, **caractérisé en ce qu'**il sert à analyser un milieu introduit à travers les éprouvettes (33, 23).

8. Dispositif d'essai (1) selon au moins l'une quelconque des revendications 1 à 7, **caractérisé en ce que** le dispositif de mesure (40) comprend des capteurs (41a), lesquels sont disposés dans la zone d'une fixation d'éprouvette (22, 32) et servent à mesurer les forces de frottement résultantes.

9. Dispositif d'essai (1) selon au moins l'une quelconque des revendications 1 à 8, **caractérisé en ce que** le dispositif de mesure (40) présente au moins un capteur (42), lequel sert à détecter la force normale appliquée par l'intermédiaire de l'unité d'entraînement (10) sur l'ensemble d'éprouvettes.

10. Dispositif d'essai (1) selon au moins l'une quelconque des revendications 1 à 9, **caractérisé en ce que** le dispositif de mesure (40) détecte une pluralité de paramètres de la mise en oeuvre de l'analyse.

11. Dispositif d'essai (1) selon au moins l'une quelconque des revendications 1 à 10, **caractérisé en ce que** le dispositif de mesure (40) présente dans la zone du support (13) désaccouplé au moins un capteur (45), qui sert à déterminer la position de l'unité d'entraînement (10) .

12. Dispositif d'essai (1) selon au moins l'une quelconque des revendications 1 à 11, **caractérisé en ce que** des valeurs de mesure du dispositif de mesure (40) sont transférées en tant que valeurs d'entrée au microprocesseur (51).

13. Dispositif d'essai (1) selon au moins l'une quelconque des revendications 1 à 12, **caractérisé en ce que** le microprocesseur (51) comprend un dispositif de réglage de charges, lequel règle la force d'essai.

14. Dispositif d'essai (1) selon au moins l'une quelconque des revendications 1 à 13, **caractérisé en ce que** le microprocesseur (51) comprend des interfaces, auxquelles un dispositif d'évaluation ou une unité de commande spécifique à l'appareil peut être raccordé ou raccordée.
